# EUROPEAN PATENT APPLICATION

(11) **EP 1 611 941 A2**
(43) Date of publication of application: **04.01.2006**
(21) Application number: 05076504.9
(22) Date of filing: 30.06.2005
(51) Int. Cl.: B01D 69/10, B01D 71/02, B01D 67/00, B01D 69/02

(54) **Membrane on a support, and method for manufacturing such a membrane**

(30) Priority: 30.06.2004 NL 1026530
(71) Applicant: Friesland Brands B.V., 7943 PE Meppel (NL)
(72) Inventor: Bos, Rolf, 8032 LC Zwolle (NL); Hollander, Franky Franciscus Anthonius, 7328 WS Apeldoorn (NL); Jongsma, Tjeerd, 6721 DZ Bennekom (NL); Van Rijn, Cornelis Jan, 7201 JE Zutphen (NL)
(74) Representative: Winckels, Johannes Hubertus F.

(57) **Abstract**

The invention relates to a membrane on a support for filtering liquids, comprising a support and a membrane. The invention further relates to a method for manufacturing a membrane on a support according to the invention. The invention further relates to use of a membrane on a support according to the invention and to a module containing such a membrane. Also, the invention relates to a method for determining breakage in such a membrane on a support.

## Description

The invention relates to a membrane on a support for filtering liquids, comprising a support and a membrane. The invention further relates to a method for manufacturing a membrane on a support according to the invention. The invention further relates to use of a membrane on a support according to the invention and to a module containing such a membrane on a support. The invention also relates to a method for determining breakage in such a membrane on a support.

From American patent publication US 5,753,014 corresponding with NL 93.10971, a filter membrane is known. This filter membrane comprises a membrane with openings. These openings have a pore size of 5 nm to 50 µm. The membrane can be formed by deposition of a thin layer on a support, by means of for instance a suitable vapor deposition or spin coating technique. Then, perforations are provided in the membrane thus formed, for instance by means of etching after a lithography step. For the rest, it is noted that such a membrane can serve as a support for the deposition of a separating layer, for instance for ultrafiltration, gas separation or catalysis.

If a support is present, this support can be etched away completely or be provided with openings having a diameter which is larger than those of the openings in the membrane. In the first case, only the membrane remains, while in the second case the membrane is supported by the support.

However, a drawback of such membrane filters according to this American patent is that they are mechanically weak. The walls of the membrane supports thus formed substantially consist of crystal faces if crystalline starting material is used, for instance the <111> orientations in the case of [100] or [110] silicon. This mechanism is inherent in the method used in this American patent. This means that any breaks present in case of mechanical load can easily result in breakage of the support and therefore of the filter membrane. In effect, the same also holds true for the membrane as such.

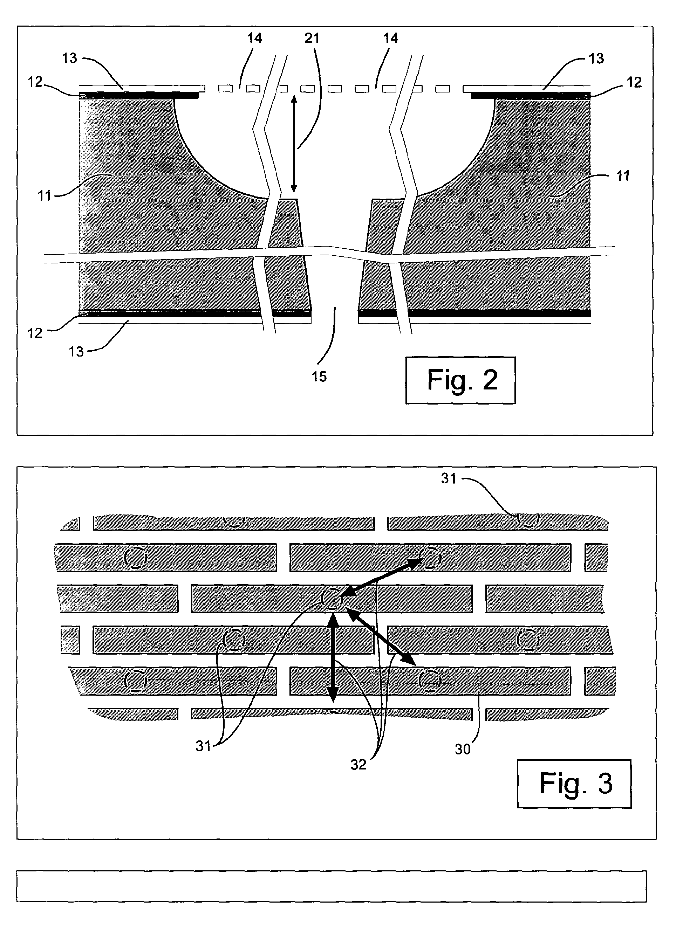

Further, it is true that, with the techniques known at the time of this American patent, it is possible to etch a pattern in the outer part of a support or in a layer applied thereon, but the etching of this pattern through the support results in important drawbacks. It is, for instance, not or hardly possible to prevent underetching with these techniques (see Fig. 2). In this context, underetching is understood to mean the phenomenon known to a skilled person in which etching takes place under a protective layer, such as a lacquer layer. In this manner, the underlying structure is unintentionally damaged.

In addition, in case a silicon [100] or [110] wafer is used, and an anisotropic etching technique is used, no round or virtually round hole is obtained. This is because, in that case, the <111> directions determine the preferred etching directions, so that diamond-shaped openings are formed, which are further tapering.

Each opening which does not substantially run straight has the further drawback that the flow through such an opening is hindered further.

Also, with the filter membranes formed in this US 5,753,014 patent, it is not possible to monitor the integrity of the membrane and/or support without interruption of the manufacture in an apparatus. This is disadvantageous to the utilization ratio of such an apparatus.

Further, with such a membrane according to the US 5,753,014 patent, it is not possible to monitor the activity with regard to, for instance, filtration efficiency and microscopic breaks.

An object of the present invention is to provide a reinforced membrane on a support.

It has now surprisingly been found that, by providing the support with continuous sieve bands, a considerably greater mechanical strength is obtained.

Therefore the present invention relates to a membrane on a support, wherein the support is provided with continuous sieve bands.

A further object of the present invention is to provide a membrane on a support, which is provided with means for monitoring the integrity of the membrane on a support.

It has now surprisingly been found that such a membrane on a support can be obtained by providing it with at least one electrical conductor. With this, it is even possible to monitor the integrity of the membrane on a support in the manufacturing process itself.

Therefore the present invention relates to a membrane on a support which is provided with at least one electrical conductor, with which the integrity of the membrane and the activity of the membrane can be monitored without disturbing a manufacturing process.

Thus, a better utilization ration of manufacturing equipment is obtained as well as a better controlled activity of the membrane.

A further object of the present invention is to provide a method for manufacturing a reinforced membrane on a support.

It has now surprisingly been found that by first etching a pattern in a second side of a support or in the layer applied thereon, and etching through this in a next step, openings are obtained having a desired size, depth and tapering, without the abovementioned drawbacks.

Therefore the present invention relates to a method for manufacturing such a membrane on a support.

A further object of the invention is to provide a method for providing a membrane on a support with means for enabling monitoring of the integrity of the membrane on a support.

It has now surprisingly been found that such a membrane on a support can be obtained by providing it with at least one electrical conductor. It is even possible to monitor the integrity of the membrane on a support in the manufacturing process itself.

Therefore the present invention relates to a method for manufacturing a membrane on a support which is provided with at least one electrical conductor, with which the integrity of the membrane as well as the activity of the membrane can be monitored without disturbing, for instance, a manufacturing process.

A membrane on a support according to the invention is particularly suitable for filtering a fluid, in particular liquids, because, on the one hand, it has an excellent and selective separating capacity for particles of different sizes and, on the other hand, it is simple to use. For the rest, a membrane on a support according to the invention is also particularly suitable for the separation of particles of different sizes in a gas. This separation can even be improved further with the aid of two membranes in series. Also, with two membranes in series, particles having a specific size range can be separated.

In addition, a membrane on a support according to the invention is much more resistant to the occurrence of breaks. This is an important advantage, because, for instance, as a result, the membrane on a support needs to be replaced much less often. This improves the utilization ratio of a processing apparatus. In addition, an important advantage of fewer breaks is that a separation continues to proceed much more homogeneously.

Further, much less fouling occurs compared with conventional filters. The inventors are of the opinion that this is caused by the thin and smooth surface of the membrane. Also, compared with other filters, due to a special design of *inter alia* the openings in the membrane on a support, the membrane on a support according to the invention can more easily be subjected to back flushing and/or back pulsing so that cleaning is simplified and improved. This back flushing and/or back pulsing further benefits a complete filtration because the filtration proceeds better after flushing and a less frequent or prolonged back flushing and/or back pulsing needs to be carried out, so that for instance less processing time is lost.

In addition, the membrane on a support according to the invention is much stronger than currently conventional and similar membranes, in the sense that much larger pressures can be resisted.

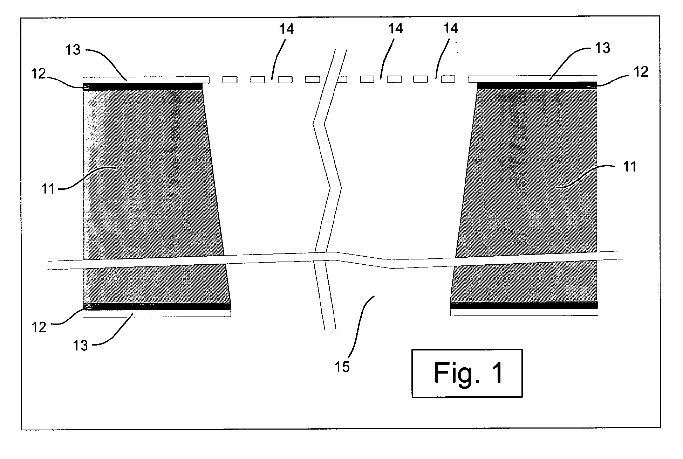

Fig. 1 shows a schematic cross section of an example of a membrane on a support. Fig. 1 describes a membrane 13 provided with openings 14 and a support 11 which is covered on two sides by an extra layer 12, while layer 13 may be a possibly protecting layer. Layer 13 is for instance a Si₃N₄ layer, layer 12 is for instance a SiO₂ layer, layer 11 is in that case crystalline Si, and 15 is an opening in the support.

Fig. 2 shows a schematic cross section of a similar membrane on a support. The support is now provided with an additional "basin (21)". This basin has been obtained by two etching steps instead of one. The lower side was etched using a different etching technique (DRIE) than the upper side (isotropic wet chemical etching through the membrane) (see hereinbelow in detail). An advantage is that relatively much Si support material is left, which yields a stronger wafer.

Fig. 3 shows a schematic top plan view of an example of a membrane on a support, such as the one of Fig. 2. The support is provided with openings 31. 30 is a piece of freely suspended membrane and 32 indicates the orientation between two of these freely suspended membranes. So the freely suspended membrane has a rectangular shape.

In a first embodiment, the invention relates to a membrane on a support, wherein the support is provided with continuous sieve bands.

The term "membrane" is understood to mean a layer which is provided with openings. These openings are highly uniform with respect to size, depth and shape. Such a membrane may for instance be used in filter apparatuses.

A membrane may consist of a material which is optionally deposited on a support. Suitable materials are for instance inorganic or ceramic components, such as silicon, carbon, silicon oxide, silicon nitride, silicon oxynitride, silicon carbide, silicides, alumina, zirconium oxide magnesium oxide, chromium oxide, titanium oxide, titanium oxynitride, titanium nitride and yttrium barium copper oxides. A metal or an alloy with palladium, lead, gold, silver, chromium, nickel, steel, an iron alloy, tantalum, aluminum and titanium may also be used as a membrane material.

Actually there are not many limitations to a choice of a material of a membrane. The most important limitations are that a membrane needs to be compatible with a support. That is to say that a membrane and a support need to be sufficiently bound with each other by chemical or physical binding. This may optionally be achieved by means of an intermediate layer. Further, a membrane needs to be suitable for a chosen use: for instance, it needs to be chemically inert and not toxic. A preferred material for a membrane is silicon nitride, because of a relatively simple manner of depositing and chemical inertia.

The term "support" is used to indicate a structure which is intended to support a membrane. With this, particularly the mechanical properties of a membrane or improved without other properties being affected too adversely.

The support is usually bound to the membrane, for instance by depositing the membrane on the support. Suitable materials for the support of the membrane on a support according to the invention are preferably composed of inorganic or ceramic components. Examples thereof are silicon, carbon, silicon oxide, silicon nitride, silicon oxynitride, silicon carbide, silicides, alumina, zirconium oxide magnesium oxide, chromium oxide, titanium oxide, titanium oxynitride and titanium nitride and yttrium barium copper oxides. A metal or an alloy with palladium, tungsten, gold, silver, chromium, nickel, tantalum, aluminum and titanium, an iron alloy, for instance steel, may also be used as a support material. Optionally, a polymer material may be used for the support such as polyurethane, polytetrafluoroethene (TEFLON), polyamide, polyimide, polyvinyl, polymetamethylacrylate, polypropene, polyolefin, polycarbonate, polyester, cellulose, polyformaldehyde and polysulphone.

For biomedical uses, the support may be composed of a biocompatible material such as silicon nitride, silicon carbide, silicon oxynitride, titanium, titanium oxide, titanium oxynitride, titanium nitride, polyamide and polytetrafluoroethene (TEFLON). The support may also be provided with a biocompatible cover from these materials or provided with a different biocompatible cover, for instance a heparin cover.

The support may consist of macroporous material, such as a tortuous pore structure, a sintered ceramic material, a sintered metal powder or a tortuous polymer membrane, as well as of an initially dense material in which openings are made in a later stage, for instance a semiconductor wafer, a metal support or an inorganic disc.

The term "continuous sieve bands" is understood to mean bands in which support openings are positioned. These support openings are typically positioned at substantially regular distances from one another. Here, continuous is understood to mean that the sieve bands are not interrupted by, for instance, bands positioned perpendicular thereto in which no openings are present. Between the sieve bands, support strips having, for instance, a width of a few millimeters, preferably of 1-8 millimeters, are present, which support strips do not contain any support openings. By providing the support with such sieve bands and strips, extra strength for the membrane on a support is obtained without too much surface remaining unused for the actual filtration use.

So, the term "strip" is understood to mean a space between the sieve bands which has no support openings and therefore does not actively participate in the filtration process. These strips contribute to the strength of the membrane on a support. The strips are preferably 1-8 millimeters wide, preferably 2-6 millimeters wide, and most preferably 3-5 millimeters wide.

The sieve bands are usually at least a factor of about 2 wider than the strips.

On a membrane side, the mask preferably contains a pattern with rectangular slots having dimensions of 0.1 by 0.1 µm² to 5.0 by 5.0 nm². The advantage of such slots is that they can simply be imaged with existing lithographic techniques and have a good activity. These slots are sufficiently selective, *inter alia* because they can be formed sufficiently homogeneously.

The exact dimensions of the slots are determined by the use. Examples thereof are filtering microorganisms from milk: 0.6-0.9 x 2.0-4.0 µm², filtering fat 0.2-0.3 x 0.2-0.3 µm², filtering proteins 0.1-0.1 µm².

The term "slot" is understood to mean a rectangular opening.

Further, on the support side, the mask preferably contains a pattern with substantially round openings having a diameter from 100 µm to 1000 µm, more preferably a diameter from 200 µm to 500 µm, most preferably with a diameter from 200 µm to 300 µm, while the openings are in bands having a width of 3-5 mm, with a non-lighted space between the bands of 1-8 mm. In a preferred embodiment, the bands are about 8 mm wide and an interspace or strip is about 3 mm.

The thickness of the membrane is preferably from 50 nm to 2 µm, more preferably from 300 nm to 1,5 nm, most preferably about 1 µm. The choice of the thickness of the membrane depends on *inter alia* the choice of the size of the openings in the support. For instance, if a thin membrane is chosen, it will be possible to compensate for the reduced strength thereof by providing smaller openings in the support. It will be clear to a skilled person that, in elation to other characteristics of the membrane on a support, such parameters can simply be adjusted to obtain the desired properties, such as selectivity and strength. In addition, depositing takes proportionally longer if the layer becomes too thick, which is economically unattractive. If the layer is too thin, the layer has insufficient activity, for instance because then it is insufficiently homogeneous with regard to thickness over the relevant distance range, and the layer is not sufficiently strong. The membrane may be from the abovementioned materials and is preferably from Si₃N₄.

Such a membrane on a support usually has sufficient strength to be able to resist a pressure of about 7 bar, while the currently known membranes of a similar type can only resist a pressure of maximally about 4 bar.

In a second embodiment, the invention relates to a membrane on a support, while the support comprises openings with walls with directions which are substantially different from the preferred crystal orientation.

The term "crystal orientation" is understood to mean a term for a vector relating to the crystal lattice which is common in crystallography.

The term "preferred crystal orientation" is understood to mean that orientation or those orientations which occur if a material such as a support is etched, particularly if the material is wet-etched. In the case of Si, for instance, in the case of a [100] surface, the <111> is this preferred crystal orientation. It is assumed that a drawback of such preferred orientations is that the corners are centers for stress upon load and will act as points for the initiation of breakage of the support and therefore also of the membrane. If the holes formed in the support are also in a commensurable pattern with the Si wafer (for instance all square sides of a hole are on a <100> orientation), then a break can easily occur. Thus, inherently, a mechanism is present that the risk of breakage is increased along these dislocations, in particular upon mechanical load, which is disadvantageous to the life of the membrane on a support.

In a typical example, the openings of the support will have a substantially round or oval cross section.

In a third embodiment, the invention relates to a membrane on a support, where the walls of the openings of the support are substantially perpendicular to the surface of the support, or have a positive tapering or a negative tapering, or have a combination thereof.

An example of such a membrane on a support is a support which is at least partly provided with openings having a positively tapering section. The angle of the section with respect to the normal of the support is in this case 1° to 25°, particularly 5° to 15°, as schematically shown in Fig. 1. If the angle becomes too large, the flow through the membrane on a support will be limited too much. On the other hand, in the case of a larger angle, more support material is present, which is favorable to the strength.

The term "tapering" is understood to refer to the angle between the normal perpendicular to the surface and a vector along a wall of the etched opening in the support. The opening is in the shape of a conical structure which may be substantially circular or elliptical to a higher or lesser extent.

The term "positively tapering" is understood to mean a tapering where the opening decreases in size seen from the outer surface of the support towards the membrane.

The term "negative tapering" is understood to mean a tapering where the opening increases in size seen from the outer surface of the support towards the membrane.

In a further embodiment, the invention relates to a membrane on a support, where the membrane and the support are each provided with a chemically inert protective layer. This layer is preferably a hydrophilic protective layer, for instance a hydrophilic plastic layer, or an inorganic layer, such as titanium oxide or silicon carbide.

Both the membrane and the support are preferably provided with a protective layer. This protective layer serves to protect the membrane on a support from environmental influences and to thus effect a longer life of the membrane on a support.

Further, this layer is preferably hydrophilic, because this reduces the adhesion of particles on this layer during the filtration of liquid. As a skilled person will understand, the choice of a hydrophilic layer will be connected with a liquid to be filtered and the effect to be achieved. In the case of an aqueous liquid, usually a hydrophilic layer will be chosen. This choice is advantageous to the activity of the membrane on a support.

The thickness of the protective layer is preferably from 30 nm to 1 µm, more preferably from 40 nm to 200 nm and most preferably about 50 nm. Too thin a layer does not offer sufficient protection, while forming too thick a layer takes too much time. The protective layer may be from the abovementioned materials and is preferably from Si₃N₄. Si₃N₄ is not only virtually chemically inert for a large variety of uses, but is, moreover, also a strong material. It is true that Si₃N₄ is not a hydrophilic material, but it is otherwise sufficiently suitable.

The term "chemically inert" is understood to refer to a property which ensures that, in the conditions in which the membrane on a support is used, it is chemically virtually not affected during the life of the membrane and support.

The term "hydrophilic protective layer" is understood to mean a layer which is hydrophilic and protects the underlying layer from environmental influences, such as for instance temperature, moisture, liquid or gas used, light, etc.

In a further embodiment, the invention relates to a membrane on a support, provided with at least one electrical conductor surrounded by a dielectric.

The term "electrical conductor" is understood to mean a material which conducts electrons to a sufficient extent. The electrical conductor consists of one structure which is considerably larger in one dimension (length) than in the two other dimensions (width and thickness). The electrical conductor can be understood as a wire which runs over the membrane and/or the support.

Examples of materials which can be applied as an electrical conductor by conventional methods are tungsten, aluminum and silicon, which conductor can also be doped/doted to increase the conduction.

The purpose of such a conductor is to enable simple determination of the integrity of the membrane and/or support. Preferably, this determination takes place when the membrane on a support is in use, for instance during the manufacture or during breaks in the manufacture. In this manner, the integrity of the membrane on a support can be guaranteed more or less continuously or as often as necessary. If the membrane on a support does not suffice anymore, because the integrity has wholly or partly been lost, it can be decided to replace the membrane on a support. This considerably increases the utilization ratio of a filter apparatus used and improves the activity of the membrane on a carrier.

The term "dielectric" is understood to mean a material which is not or poorly electrically conductive. An example of such a material is SiO₂. The dielectric insulates the electrical conductor from its environment, in any case with regard to electrical conductivity.

Usually, the electrical conductor is wholly surrounded by a dielectric, with the exception of the contact points. The dielectric preferably consists of two layers, which are deposited before and after the electrical conductor. The first layer insulates the electrical conductor from the base, while the second insulates the conductor from the rest of the environment and/or next layer. However, the dielectric may also consist of a non-conductive or poorly conductive base and a layer which is deposited on the electrical conductor. It will be clear to a skilled person that, for the purpose of insulating the electrical conductor, any conventional technique or combination of techniques is suitable.

In a further embodiment, the invention relates to a membrane on a support, provided with at least one electrical conductor in a first direction and at least one electrical conductor in a second direction, which second direction does not run parallel to the first direction.

In a preferred embodiment according to the invention, at least one electrical conductor runs in the first direction and at least one electrical conductor in the second direction over each intersection of the membrane.

The term "intersection" is understood to mean the area between a number of adjacent openings in the membrane, for instance four in the case of a rectangular lattice. These four openings are in that case one below the other or, equivalently, next to one another in pairs. They may for instance be arranged in a rectangle, such as a square.

By providing a membrane on a support with electrical conductors in such a manner, it is essentially possible to determine the integrity of each individual opening. This is because a local break results in a changed, usually increased or very high resistance of the, in this example, two electrical conductors which intersect the intersection at the location of the break. By the combination of the information about the individual conductivities, the location of a possible break can be determined. This offers considerable advantages.

For a start, the integrity of a membrane on a support can be monitored as a whole, while a continuous or semi-continuous measurement of the resistance of the electrical conductor(s) present can result directly in replacement of the membrane broken in that case, and therewith the broken support.

It is further possible to monitor the efficiency of the membrane in time. This is because gradually more and more microscopic breaks will be formed. This means that in effect openings are formed of a larger size than the original openings. This gradually makes it possible and increasingly easier for larger particles to pass the membrane and therefore the separating efficiency decreases.

In addition, with monitoring the increase of the number of breaks, it can be decided to early replace or repair the membrane as a whole, to thus prevent an expected break. An important advantage of this is that unpurified material is prevented from ending up further in a process after breakage has occurred.

In a further embodiment, the invention relates to a method for manufacturing a membrane on a support, comprising the steps of
a. providing a membrane on a first side of the support, which support is, on a second side, provided with a layer to be etched;
b. etching a pattern through the layer to be etched on the second side of the support and
c. etching the pattern obtained in step b through the core of the support up to the membrane.

The term "etching" is understood to mean a chemical process with which a layer or a part of a layer is removed. The etching may be a wet etching step or a dry etching step.

In step b), first of all, a pattern is etched in the first layer on the second side of the membrane. After this pattern has been etched in this relatively thin layer, the etching is stopped. Etching this pattern is preferably carried out with RIE. Then, the support itself is not or hardly etched. Then, in step c), with a different technique, preferably DRIE, the same pattern is etched through the support. This means that the support is provided with openings which run all the way through the support. The support is locally etched away completely. The etching stops, for instance, on the membrane layer, or on an optional layer between the membrane and the support, which is then located on the other side. Thus, the membrane remains completely or virtually completely intact.

The term "pattern" is understood to mean the term conventional in lithography, which refers to the imaging of a negative on a light-sensitive layer As a light-sensitive layer, preferably a water-soluble lacquer is used. This lacquer is then lighted by means of negative and cured. Then, the thus obtained pattern is ready for further processing, such as etching.

It has now surprisingly been found that by first etching a pattern in an outer layer on the support side or the layer applied thereon, and etching this through in a next step, openings are obtained which have the desired size, depth and tapering, without the abovementioned drawbacks. Openings are obtained which have a great homogeneity with regard to relevant characteristics, such as size, depth and tapering. In addition, underetching of the layer to be etched does not occur or hardly occurs. This is very beneficial to the strength of the membrane on a support.

In another further embodiment, the invention relates to a method for manufacturing a membrane on a support, comprising the steps of:
a. providing a support;
b. applying a membrane to a membrane side of the support;
c. applying a layer to a support side;
d. applying and lighting a mask to the membrane side;
e. etching the membrane on the membrane side;
f. applying and lighting a mask to the support side;
g. etching a pattern in the layer on the support side;
h. etching this pattern through to the membrane of the membrane side.

In a preferred embodiment according to the invention, the invention relates to a method for manufacturing a membrane on a support, where, after step a) and before step b), an intermediate layer is applied to the membrane side of the support, on which intermediate layer the etching through of step h) stops.

In a preferred embodiment according to the invention, the invention relates to a method for manufacturing a membrane on a support, where a protective layer is deposited on both sides.

An additional effect of the deposition of such a protective layer is that the size of the openings of the support and/or membrane can slightly change. Usually, the openings will be filled up a little so that they become smaller.

The term "intermediate layer" is understood to mean a layer which is applied to another layer, in this case to the support on the membrane side thereof. The purpose of an intermediate layer is, for instance, to improve the adhesion between adjacent layers or to obtain a cleaner surface. This layer can further also serve as an etch stop in a next process step, such as for instance etching through the support from the other side up to such an intermediate layer. The advantage of this is that the etching stops on this layer, and does not continue through, for instance, the membrane. This membrane is then protected against etching from the other side and is thus not affected at all. Thus, further a much more homogeneous etching can be achieved. In fact, use is made of the difference in etching rate, which is high in the layer to be etched and low in the etch stop. An example of a suitable material as an intermediate layer is SiO₂.

The term "membrane" is understood to mean the layer as defined hereinabove. As indicated, preferably Si₃N₄ is used for this.

The term "mask" is understood to mean the term which is conventional in lithography, containing the image or the negative of a pattern to be imaged. The image is usually imaged in a photosensitive layer or lacquer. This layer or lacquer is usually cured. Then, another process step follows. After this next process step, the photosensitive layer or lacquer is usually removed.

The term "wet etching" is understood to refer to a chemical process by which layers or a part of a layer is/are removed by means of a chemically active solution. This solution is, for instance, water-based and may, for instance, contain a hydroxide in case a metal oxide or semiconductor oxide is etched. Examples of hydroxides are NaOH and KOH, KOH being preferred.

Preferably, on the membrane side, the mask contains a pattern with rectangular slots having dimensions of 0.1 by 0.1 µm² to 5.0 by 5.0 µm². The advantage of such slots is that they can simply be imaged with existing lithographic techniques and have a good activity. It will be clear to a skilled person that, depending on the size of the image, a wavelength will be chosen in a suitable range in order to be able to image the desired pattern. These slots are sufficiently selective, *inter alia* because they can be formed sufficiently homogeneously. The exact dimensions of the slots are determined by the use. Examples thereof are filtering microorganisms from milk: 0.6-0.9 x 2.0-4.0 µm², filtering fat 0.2-0.3 x 0.2-0.3 µm², filtering proteins 0.1-0.1 µm². It will further be clear to a skilled person that a choice of smaller openings is usually associated with a lower flow rate.

A further advantage of slots compared with round holes is that slots are obstructed less easily. Round or substantially round particles present in a liquid to be filtered can easily obstruct round openings, while, in the case of slots, then a part of the opening still remains clear. A considerable part of the particles in a liquid to be filtered is somewhat round. Further, slots can be cleaned much more simply by means of back flushing and/or back pulsing.

The term "slot" is understood to mean a rectangular opening, as already indicated hereinabove.

Further, on the support side, the mask preferably contains a pattern with substantially round openings having a diameter of 100 µm to 1000 µm, more preferably a diameter of 200 µm to 500 µm, most preferably having a diameter of 200 µm to 300 µm, while the openings are in bands having a width of 3-15 mm, with a non-lighted space ("strip") between the bands of 1-8 mm. In a preferred embodiment, the bands are about 8 mm wide and an interspace/strip is about 3 mm.

Etching the pattern in the layer on the support side preferably takes place by means of RIE. The term "RIE" is understood to mean the term "Reactive Ion Etching" which is conventional in chemistry. Typically, this is understood to refer to a chemical process in which reactive ions remove layers or a part of a layer. Examples of suitable compositions for etching are known to a skilled person. An example thereof is SF₆/CH₃/O₂. Likewise, a skilled person will be able to simply and routinely determine a suitable temperature range as well as a suitable pressure range, depending on the desired use and the desired result.

Etching the pattern on the support side through the core of the support preferably takes place by means of DRIE. The term "DRIE" is understood to mean the term "Deep Reactive Ion Etching" which is conventional in chemistry. The difference from RIE particularly resides in the fact that with DRIE, as the name already indicates, relatively deep structures, such as openings, can be etched in a homogeneous manner. This effect is achieved by alternate etching and covering the formed sidewall of the opening with a polymer or a similar material. This prevents the side from being etched too much. In addition, virtually perpendicular openings are obtained having a small tapering, or a high aspect ratio. An example of such a process is the so-called Bosch process. Examples of suitable compositions for etching are further known to a skilled person. Likewise, a skilled person will be able to simply and routinely determine a suitable temperature range as well as a suitable pressure range, depending on the desired use and the desired result.

The thickness of the membrane is preferably from 50 nm to 2 µm, more preferably from 100 nm to 1.5 nm, and most preferably 1 µm, and the thickness of the layer on the support side is preferably from 50 nm to 2 µm, more preferably from 100 nm to 1.5 nm, and most preferably 1 µm. It will be clear from the above that the choice is determined by the desired characteristics and properties of the membrane on a support. If the layer becomes too thick, deposition takes proportionally longer, which is economically unattractive. If the layer is too thin, the layer has insufficient activity, for instance because then it is insufficiently homogeneous with regard to thickness over the relevant distance range, and the layer is not sufficiently strong. The membrane may be from the abovementioned materials and is preferably from Si₃N₄. As a suitable alternative, silicon carbide may also be mentioned.

The membrane, the support layer and the optional protective layer are preferably deposited by means of a CVD technique, epitaxial growth technique, spin coating or sputtering, more preferably by means of CVD and most preferably by means of LPCVD. The advantage of these techniques is that uniform layers can be deposited in a relatively simple and not too expensive manner.

The terms "CVD" and "LPCVD" are understood to mean "Chemical Vapor Deposition" and "Low Pressure Chemical Vapor Deposition", respectively.

The thickness of the optional protective layer is preferably from 30 nm to 1 µm, more preferably from 40 nm to 200 nm and most preferably about 50 nm. Too thin a layer does not offer sufficient protection, while forming too thick a layer takes too much time. The protective layer may be from the abovementioned materials and is preferably from Si₃N₄.

In a further embodiment, the invention relates to a method for manufacturing a membrane on a support which comprises the steps of:
a. depositing at least one electrical conductor in a first direction;
b. covering at least one electrical conductor in the first direction with a dielectric;
c. depositing at least one electrical conductor in a second direction and
d. covering at least one electrical conductor in the second direction with a dielectric.

With such a method according to the invention, a network is obtained which covers the membrane and/or support. This network ensures that it is possible to determine in both directions whether a break is present. This break can be both microscopic and macroscopic. Thus, by an external measurement or series of measurements, the condition of the membrane and/or support can simply be determined.

The electrical conductors are preferably connected with pads. These pads are in turn provided with an inert and conductive layer, such as gold. The pads are used as contact points with the outside world, for instance an apparatus measuring the conduction over the electrical conductors.

The electrical conductors are preferably positioned parallel to the main directions of the membrane on a support, that is, parallel and perpendicular to the direction of the sieve bands.

Examples of materials which can be applied by conventional methods and are suitable as electrical conductors are tungsten, aluminum and silicon, which may optionally be doped to increase the conduction.

The width of the conductors is preferably considerably smaller than the size of the openings and/or the size of the space between the openings and is preferably from 100 to 500 nm, more preferably from 200 to 300 nm. The thickness of the conductors is preferably 50 nm to 500 nm, more preferably from 200 to 300 nm. Too thin and/or too narrow electrical conductors insufficiently conduct the current and are as such less suitable.

In a further embodiment, the invention relates to the use of a membrane on a support according to the invention or obtained according to a method according to the invention for filtering a fluid. In particular, this involves filtering a liquid, particularly of milk, fruit juice, or whey.

A membrane on a support according to the invention is particularly suitable for filtering liquids, because, on the one hand, it has an excellent and selective separating capacity for particles of different sizes and, on the other hand, it is simple to use. In addition, a membrane on a support according to the invention is much more resistant to the occurrence of breaks. Further, much less fouling occurs compared with conventional filters. Also, compared with other filters, due to a special design of *inter alia* the openings in the membrane on a support, the membrane on a support according to the invention can more easily be subjected to back flushing and/or back pulsing so that cleaning is simplified and improved. Back flushing and/or back pulsing further benefits a complete filtration because the filtration proceeds better after flushing and a less frequent or prolonged back flush and/or back pulse treatment needs to be carried out, so that the utilization ratio of a filter apparatus increases.

In addition, the membrane on a support according to the invention is much stronger than currently conventional and similar membranes, in the sense that much larger pressures can be resisted.

In a further embodiment, the invention relates to a module provided with a membrane on a support according to the invention or obtained according to a method according to the invention. Such a module may for instance consist of a holder in which a membrane on a support is comprised and which as such can simply be provided in and removed from a filter apparatus. The advantage of such a module is that a relatively vulnerable membrane on a support is protected during operations, such as replacing the membrane. Further, a module can be formed such that it can more simply be placed into an existing filter apparatus compared with a membrane on a holder as such.

The term "module" is understood to mean an assembly of a membrane on a support and for instance a holder. This module can be used in, for instance, filtration processes.

In a further embodiment, the invention relates to a method for determining breakage in a membrane on a support according to the invention or obtained according to the invention, comprising the steps of
determining the extent of conduction of the electrical conductors;
localizing a possible break on the basis of the information obtained in step a).

As already described hereinabove, in such a manner, information is simply obtained about the condition of the membrane on a support according to the invention. On the basis of the thus obtained information, then any further steps can be taken, such as repair or replacement of the membrane on a support.

The invention is explained on the basis of a non-limitative example, which is only intended to serve to illustrate the scope of the invention.

### Example

As a starting material, a silicon wafer having a dimension of 15 cm (6 inch) in diameter and a thickness of 525 µm is taken. With known techniques, a layer of silicon oxide is applied, which will later serve as a stop layer for the Deep Reactive Ion Etching process. The thickness of this layer is about 100 nm. Later on in the process, this layer is located between the silicon and the silicon nitride on the side where the membrane will be located.

On both sides, with the aid of Low Pressure Chemical Vapor Deposition (LPCVD), a layer of silicon-rich silicon nitride is applied having a thickness of 1 µm.

On top of this silicon nitride layer, a photo-lacquer layer is applied by means of spin coating. In this layer, a pattern indicating the openings is provided by photolithography. These are slots having a size of 2.0 x 0.8 µm.

Now, on the support side, a mask is provided by photographic techniques. To this end, a framework is used which consists of 11 bands, each 8 mm wide, with strips of 3 mm of interspace between the frameworks, which strips surround or define the sieve bands. In this framework, the openings are then provided as follows. On the support side, a mask is used which only consists of round holes having a diameter of 250 µm.

The two perforations are aligned with respect to each other, so that, finally, the whole micro-perforated part is freely suspended.

With the aid of Reactive Ion Etching (RIE), this photosensitive pattern is transferred into the silicon nitride. This successively takes place on both sides.

With the aid of Deep Reactive Ion Etching (DRIE), straight holes are formed right through the silicon wafer up to the silicon oxide stop layer on the other side.

The method according to the invention has the following advantages:
a) it facilitates back flushing and back pulsing of the membrane during use;
b) the difference between DRIE and RIE is that, with DRIE, a substantially conical hole is obtained up to the silicon oxide stop layer without underetching taking place. This is because, in DRIE, the lateral etching rate is much lower than with RIE. (The etching rate parallel to the wafer is much smaller than the perpendicular etching rate).

In order to further increase the strength of 15-cm (6-inch) wafers for the use, the wafer is provided with sieve bands and strips, in this case 11 sieve bands, each 8 mm wide and varying in length from 6-12 cm, while the length is substantially determined by the position on the wafer. Between each two sieve bands, there is a space or strip of 3 mm. This space is used to clamp the sieve in a module. Due to the combination of sieve bands, strips and the round holes, the strength of the sieve has greatly increased.

As a last step, again an LPCVD deposition with Si₃N₄ takes place to again provide the whole surface with homogeneous (3D covering process) 50-nm Si₃N₄, so that inertia remains guaranteed during use. This is because Si₃N₄ is well resistant to lye and/or acid cleaning.

## Claims

1. A membrane on a support, wherein the support is provided with continuous sieve bands.

2. A membrane on a support according to claim 1, wherein the support comprises openings with walls with directions which are substantially different from the preferred crystal orientation.

3. A membrane on a support according to claim 2, wherein the walls of the openings of the support are substantially perpendicular to the surface of the support, or have a positive tapering or a negative tapering, or have a combination thereof.

4. A membrane on a support according to any one of claims 1-3, wherein the membrane and the support are each provided with a chemically inert protective layer.

5. A membrane on a support according to claim 4, wherein the chemically inert protective layer is hydrophilic.

6. A membrane on a support, provided with at least one electrical conductor surrounded by a dielectric.

7. A membrane on a support according to any one of claims 1-6, provided with at least one electrical conductor in a first direction and at least one electrical conductor in a second direction, which second direction does not run parallel to the first direction.

8. A method for manufacturing a membrane on a support, comprising the steps of
a. providing a membrane on a first side of the support, which support is, on a second side, provided with a layer to be etched;
b. etching a pattern through the layer to be etched on the second side of the support and
c. etching the pattern obtained in step b through the core of the support up to the membrane.

9. A method for manufacturing a membrane on a support, comprising the steps of
a. providing a support;
b. applying a membrane to a membrane side of the support;
c. applying a layer to a support side;
d. applying and lighting a mask to the membrane side;
e. etching the membrane on the membrane side;
f. applying and lighting a mask to the support side;
g. etching a pattern in the layer on the support side;
h. etching this pattern through up to the membrane of the membrane side.

10. A method for manufacturing a membrane on a support according to claim 9, wherein, before step b), an intermediate layer is applied to the membrane side of the support, on which intermediate layer the etching through of step h) stops.

11. A method for manufacturing a membrane on a support according to any one of claims 9-10, wherein a protective layer is deposited on both sides.

12. A method for manufacturing of a membrane on a support, comprising the steps of:
a. depositing at least one electrical conductor in a first direction;
b. covering the at least one electrical conductor in the first direction with a dielectric;
c. depositing at least one electrical conductor in a second direction and
d. covering the at least one electrical conductor in the second direction with a dielectric.

13. Use of a membrane on a support according to any one of claims 1-7 or obtained according to any one of the methods according to claims 8-12, for filtering a fluid.

14. A module provided with a membrane on a support according to any one of claims 1-7 or obtained according to any one of the methods according to claims 8-12.

15. A membrane on a support obtainable according to the method according to claims 8-12.

16. A method for determining breakage in a membrane on a support according to any one of claims 1-7 or obtained according to any one of the methods according to claims 8-12, comprising the steps of
a. determining the extent of conduction of the electrical conductors;
b. localizing a possible break on the basis of the information obtained in step a).
